# EUROPÄISCHE PATENTSCHRIFT

(11) **EP 2 015 958 B1**
(45) Veröffentlichungstag und Bekanntmachung des Hinweises auf die Patenterteilung: **28.07.2010**
(21) Anmeldenummer: 07724841.7
(22) Anmeldetag: 03.05.2007
(51) Int. Cl.: B60N 2/22

(54) **VERSTELLBESCHLAG FÜR EINE KRAFTFAHRZEUGKOMPONENTE UND VERFAHREN ZUR SICHERUNG DER ARRETIERUNG EINES VERSTELLBESCHLAGS**
ADJUSTMENT FITTING FOR A MOTOR VEHICLE COMPONENT, AND METHOD FOR SECURING THE LOCKING EFFECT OF AN ADJUSTMENT FITTING
FERRURE DE REGLAGE POUR UN COMPOSANT D'UN VEHICULE AUTOMOBILE, ET PROCEDE DE BLOCAGE DE L'ARRET D'UNE FERRURE DE REGLAGE

(30) Priorität: 03.05.2006 DE 102006020751
(43) Veröffentlichungstag der Anmeldung: 21.01.2009
(73) Patentinhaber: Johnson Controls GmbH, 51399 Burscheid (DE)
(72) Erfinder: KIRUBAHARAN, Albert, 51399 Burscheid (DE); KIENKE, Ingo, 42929 Wermelskirchen (DE); BUDWEG, Mario, 42499 Hückeswagen (DE); OTTO, Jürgen, 51399 Burscheid (DE)
(74) Vertreter: Wolff, Felix
(86) Internationale Anmeldenummer: PCT/EP2007/003916
(87) Internationale Veröffentlichungsnummer: WO 2007/124959

(56) Entgegenhaltungen:
- DE-A1- 10 232 029
- DE-C1- 19 548 809

## Beschreibung

Die vorliegende Erfindung betrifft einen Verstellbeschlag für eine Kraftfahrzeugkomponente, insbesondere einen Fahrzeugsitz, mit einem ersten Beschlagteil und mit einem hierzu mittels eines Getriebes um eine Drehachse drehverstellbar vorgesehenen zweiten Beschlagteil, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil umfasst, wobei zwei Keilsegmente zur Sicherstellung der exzentrischen Anordnung der ersten Verzahnung relativ zur zweiten Verzahnung vorgesehen sind.

Solche Verstellbeschläge sind allgemein bekannt. Beispielsweise ist aus der deutschen Patentschrift DE 195 48 809 C1, die als nächstliegender Stand der Technik betrachtet wird, eine Ver- und Feststelleinrichtung für Sitze, wie Kraftfahrzeugsitze, zur Verstellung der Rückenlehne gegenüber dem Sitzteil bekannt. Hierbei wird zur Verhinderung des Ablaufens des mit der Rückenlehne verbundenen Beschlagteils während eines durch Rütteln und Stoßen gekennzeichneten Zeitraums unter dynamischen Betriebsbedingungen ein Sperrring in der radialen Ebene zwischen den Keilsegmenten und dem Mitnehmer angeordnet, wobei der Sperrring an einem Außenumfang wenigstens eine in die Gegenverzahnung des festen Beschlagteils eingreifbare Sperrnase aufweist. Hieran ist nachteilig, dass für die Kraftübertragung der Sperrkraft bzw. der Bremskraft eine Vielzahl von Elementen miteinander zusammenwirken müssen, so dass zur Sicherstellung einer hohen Zuverlässigkeit der Sperreinrichtung enge Toleranzen dieser verschiedenen Bauteile eingehalten werden müssen, was die Herstellung der Feststelleinrichtung verteuert und weiterhin den Aufwand für die Herstellung der Ver- und Feststelleinrichtung erhöht.

Aufgabe der vorliegenden Erfindung ist es daher, einen Verstellbeschlag für eine Kraftfahrzeugkomponente, insbesondere ein Fahrzeugsitz, anzugeben, wobei der Verstellbeschlag einen ersten Beschlagteil und einen zweiten Beschlagteil aufweist, wobei der zweite Beschlagteil mittels eines Getriebes um eine Drehachse relativ zum ersten Beschlagteil drehverstellbar vorgesehen ist, wobei zum einen der Verstellbeschlag relativ leichtgängig ist, einfach und damit kostengünstig herstellbar ist und darüber hinaus gegen Ablaufen gerichtet ist und dennoch eine vergleichsweise geringe Anzahl von Teilen aufweist, deren Toleranzanforderungen möglichst klein sind.

Diese Aufgabe wird mit einem Verstellbeschlag gelöst, wobei der Verstellbeschlag einen ersten Beschlagteil und einen zweiten Beschlagteil aufweist, wobei der zweite Beschlagteil mittels eines Getriebes um eine Drehachse relativ zum ersten Beschlagteil drehverstellbar vorgesehen ist wobei das Getriebe eine erste Verzahnung am ersten Beschlagteil umfasst und wobei das Getriebe eine exzentrisch zur ersten Verzahnung angeordnete zweite Verzahnung am zweiten Beschlagteil aufweist, wobei zwei Keilsegmente zur Sicherstellung der exzentrischen Anordnung der ersten Verzahnung relativ zur zweiten Verzahnung vorgesehen sind. Ferner ist es gemäß einer ersten Ausführungsform der Erfindung vorgesehen, dass die Keilsegmente einen Innenradius und einen Außenradius aufweisen, wobei der Verstellbeschlag ein Bremselement aufweist und wobei das Bremselement in radialer Richtung ausgehend von der Drehachse eine Ausdehnung etwa entsprechend dem Außenradius der Keilsegmente aufweist. Hierdurch kann das Bremselement besonders bauraumkompakt und klein ausgeführt werden, so dass der Verstellbeschlag insgesamt sehr bauraumkompakt und damit kostengünstig hergestellt werden kann. Es ist vorgesehen, dass das Bremselement in eine Blockierstellung und in eine Freigabestellung einstellbar ist, wobei das Bremselement ein erstes Blockierelement umfasst, wobei in der Blockierstellung das erste Blockierelement in ein zweites Blockierelement des ersten Beschlagteils radial zur Drehachse eingreifend vorgesehen ist, wobei das zweite Blockierelement in radialer Richtung ausgehend von der Drehachse eine kleinere Ausdehnung als die zweite Verzahnung und als die erste Verzahnung aufweist. Hierdurch ist es erfindungsgemäß vorteilhaft möglich, dass ohne eine Beeinträchtigung der Funktion der Verzahnungen eine Blockierung der Beschlagteile gegeneinander durch das Bremselement in einfacher und kostengünstiger Weise möglich ist.

Bevorzugt ist es gemäß der vorliegenden Erfindung vorgesehen, dass das erste Blockierelement und das zweite Blockierelement derart vorgesehen sind, dass eine Anzahl von Blockierstellungen vorgegeben sind, wobei die Anzahl von Blockierstellungen kleiner ist als die Zähnezahl sowohl der ersten Verzahnung als auch der zweiten Verzahnung. Dies hat den besonderen Vorteil, dass das erste Blockierelement und das zweite Blockierelement vergleichsweise groß und belastbar ausgeführt werden kann, so dass auch bei extremen Belastungen, wie sie beispielsweise bei Unfällen oder dergleichen auftreten, eine sichere Blockierung durch das Bremselement gewährleistet ist. Insbesondere ist bevorzugt, wenn das zweite Blockierelement aus einer Mehrzahl von in die Ebene des Bremselements hineinragender, insbesondere im Querschnitt runder Vorsprünge gebildet ist.

Erfindungsgemäß ist es gemäß einer zweiten Asführungsform der vorliegenden Erfindung bei einem Verstellbeschlag mit einem ersten Beschlagteil und einem zweiten Beschlagteil sowie einem Getriebe mit einer ersten und zweiten Verzahnung zwischen den Beschlagteilen sowie mit zwei Keilsegmenten zur Sicherstellung der exzentrischen Anordnung zwischen der ersten und zweiten Verzahnung weiterhin vorgesehen, dass die Keilsegmente jeweils ein drittes Blockierelement aufweisen, wobei das dritte Blockierelement zum Eingriff parallel zur Drehachse in eine Ausnehmung des Bremselements vorgesehen ist. Hierdurch ist es erfindungsgemäß möglich, einen direkten Kraftübergang bzw. eine direkte Krafteinleitung zwischen wenigstens einem der Keilsegmente und dem Bremselement zu bewirken, was die Stabilität der Gesamtanordnung positiv beeinflusst.

Gemäß einer dritten Ausführungsform der vorliegenden Erfindung ist es bei einem Verstellbeschlag mit erstem und zweitem Beschlagteil, sowie einem Getriebe mit einer ersten und zweiten Verzahnung sowie zwei Keilsegmenten zur Sicherstellung der exzentrischen Anordnung der ersten und zweiten Verzahnung weiterhin vorgesehen, dass der Verstellbeschlag für einen Kraftfahrzeugsitz mit einem Sitzteil und mit einem Lehnenteil vorgesehen ist, wobei das erste Beschlagteil lehnenteilfest vorgesehen ist, wobei das zweite Beschlagteil sitzteilfest vorgesehen ist und wobei das Bremselement eine direkte Kraftwirkung zwischen dem ersten Beschlagteil und wenigstens einem der Keilsegmente vermittelt. Hierdurch ist es erfindungsgemäß besonders vorteilhaft möglich, dass die Funktionssicherheit des erfindungsgemäßen Verstellbeschlags durch die direkte Kraftübertragung positiv beeinflusst wird.

Gemäß einer vierten Ausführungsform der vorliegenden Erfindung ist es bei einem Verstellbeschlag mit einem ersten und zweiten Beschlagteil sowie einem Getriebe zwischen beiden Beschlagteilen mit einer ersten und zweiten Verzahnung sowie zwei Keilsegmenten zur Sicherstellung der exzentrischen Anordnung der ersten Verzahnung relativ zur zweiten Verzahnung erfindungsgemäß weiterhin vorgesehen, dass das Bremselement ein erstes Blockierelement und ein Federelement umfasst, wobei das Federelement vorgesehen ist, das Bremselement in Richtung des ersten Blockierelements zu verschieben, wobei das Blockierelement und das Federelement im wesentlichen an gegenüberliegenden Enden des Bremselements angeordnet sind. Hierdurch kann in einfacher Weise die Blockierwirkung weiterhin verbessert werden, weil gegenüber dem ersten Blockierelement ein größere Bauraum zur Verfügung steht, so dass das Federelement erfindungsgemäß besonders robust vorgesehen sein kann.

Ein weiterer Gegenstand der vorliegenden Erfindung ist ein Verfahren zur Sicherung der Arretierung eines Verstellbeschlags für eine Kraftfahrzeugkomponente, insbesondere ein Fahrzeugsitz, wobei der Verstellbeschlag einen ersten Beschlagteil und einen hierzu mittels eines Getriebes um eine Drehachse drehverstellbar vorgesehenen zweiten Beschlagteil aufweist, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil umfasst, wobei zwei Keilsegmente zur Sicherstellung der exzentrischen Anordnung der ersten Verzahnung relativ zur zweiten Verzahnung vorgesehen sind und wobei ein Bremselement vorgesehen ist, wodurch eine direkte Kraftwirkung zwischen dem ersten Beschlagteil und wenigstens einem der Keilsegmente vermittelt wird. Hierdurch kann eine besonders sichere und über die gesamte Lebensdauer der Verstellvorrichtung bzw. des Verstellbeschlags sicher gewährleistete Brems- bzw. Blockierwirkung des Bremselements angegeben werden.

Ausführungsbeispiele der Erfindung sind in den Zeichnungen dargestellt und in der nachfolgenden Beschreibung näher erläutert.

Die **Figuren 1 und 2** zeigen eine Vorder- und Rückansicht eines erfindungsgemäßen Verstellbeschlags in zusammengebauter Form.
**Figur 3** zeigt eine Detailansicht einer Draufsicht auf den zusammengebauten Verstellbeschlag
**Figuren 4 bis 6** zeigen verschiedene Ansichten eines Bremselements.
**Figur 7** zeigt eine Explosionsdarstellung der wesentlichen Teile des erfindungsgemäßen Verstellbeschlags.

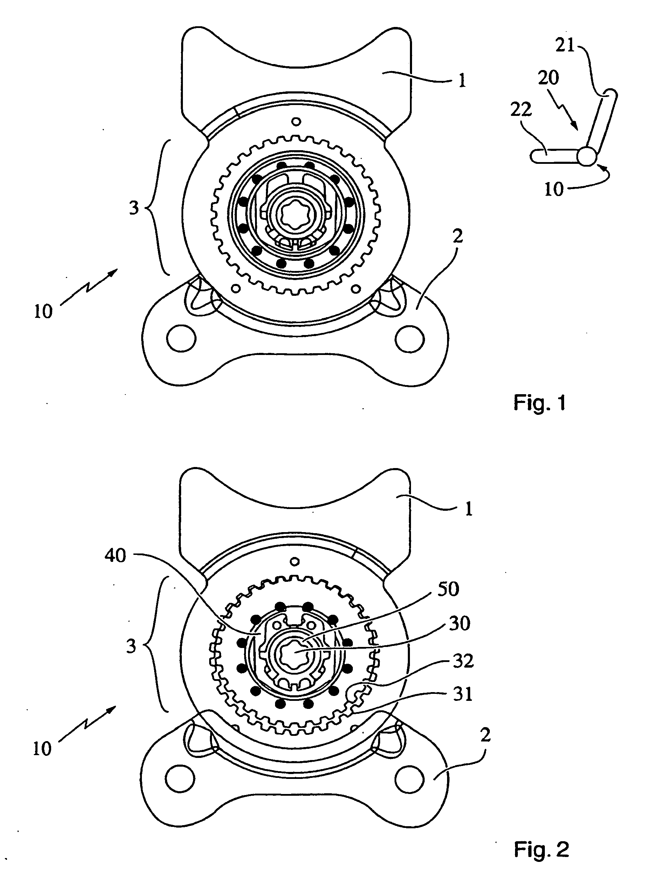

In **Figur 1 und 2** ist in Vorder- und Rückansicht ein erfindungsgemäßer Verstellbeschlag 10 dargestellt. Der Verstellbeschlag 10 verbindet ein erstes Beschlagteil 1 mit einem zweiten Beschlagteil 2. Die Beschlagteile sind durch eine Drehung eines Antriebselements 50 (vgl. Figur 2) um eine Drehachse 30 gegeneinander drehverstellbar vorgesehen, insbesondere mit einer großen Übersetzung von beispielsweise 1:20 bis 1:50, bevorzugt 1:30 bis 1:40. Hierdurch ist es erfindungsgemäß möglich, dass der Verstellbeschlag 10 zur Anbindung verschiedener drehbeweglich zueinander vorgesehener Teile einer Kraftfahrzeugkomponente verwendbar ist, stufenlos einstellbar ist und selbsthemmend ist. Eine solche Kraftfahrzeugkomponente 20 ist schematisch im rechten Teil der Figur 1 am Beispiel eines Kraftfahrzeugsitzes 20 dargestellt. Ein solcher Sitz 20 bzw. eine solche Kraftfahrzeugkomponente 20 weist beispielsweise ein Lehnenteil 21 und ein Sitzteil 22 auf, welche über einen erfindungsgemäßen Verstellbeschlag 10 miteinander drehverstellbar verbunden vorgesehen sind.

Die Drehverstellbarkeit wird erfindungsgemäß innerhalb des Verstellbeschlags 10 durch ein Getriebe 3 gewährleistet, wobei das Getriebe 3 eine erste Verzahnung 31 am ersten Beschlagteil 1 und eine zweite Verzahnung 32 am zweiten Beschlagteil 2 aufweist. Das Getriebe 3 ist erfindungsgemäß durch Reibschluss selbsthemmend ausgebildet und besonders bevorzugt als ein sogenanntes Taumelgetriebe ausgebildet. Es kann jedoch bei wiederholt und über einen längeren Zeitraum auftretenden Kraftstößen zwischen den Beschlagteilen 1, 2 (bzw. bei auftretenden Drehmomenten) vorkommen, dass das erste Beschlagteil 1 gegenüber dem zweiten Beschlagteil 2 abläuft, d. h. dass eine zwar kleine, jedoch über eine längere Zeitdauer kontinuierlich in dieselbe Richtung auftretende Verstellung der Beschlagteile 1, 2 zueinander vorkommt. Dies ist besonders dann kritisch, wenn es sich bei dem Verstellbeschlag um einen Beschlag an einem Kraftfahrzeugsitz handelt und an der Rückenlehne 21 immer Momente bzw. Kräfte in im wesentlichen die gleiche Richtung anliegen, so dass auf Dauer eine Verstellung des Verstellbeschlags auftritt, wenn keine geeigneten Gegenmaßnahmen ergriffen werden. Um eine solche Verstellung zu verhindern, ist erfindungsgemäß das Bremselement 40 vorgesehen.

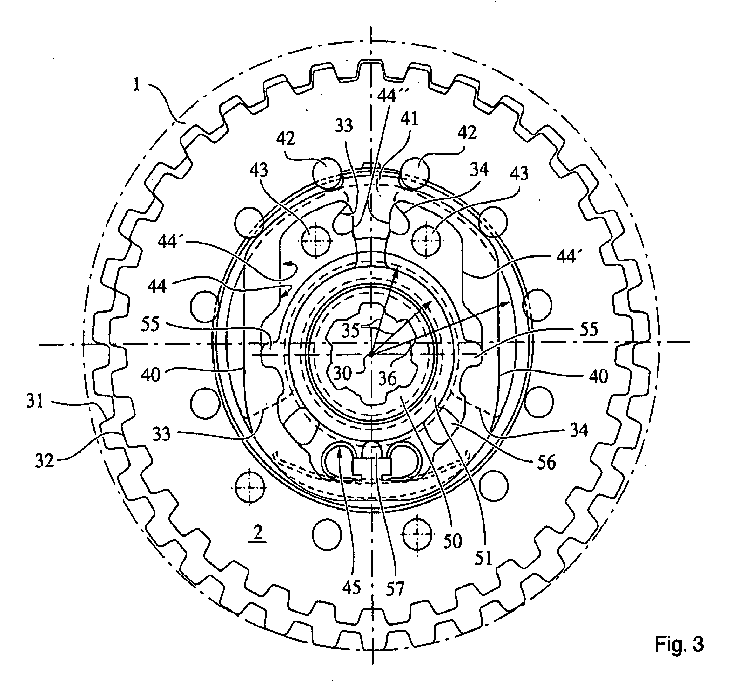

In **Figur 3** ist eine Detailansicht des Verstellbeschlags 10 bzw. des Getriebes 3 dargestellt. Hierdurch ist erkennbar, das die Drehachse 30 den Mittelpunkt bzw. die Mittelachse des Antriebselements 50 darstellt. Exzentrisch zur Mittelachse 30 ist die zweite Verzahnung 32 und damit das zweite Beschlagteil 2 angeordnet. Diese Exzentrizität wird dadurch erzielt, dass zwischen dem Antriebselement 50 und dem zweiten Beschlagteil 2 bzw. der zweiten Verzahnung 32 ein Exzenterabschnitt angeordnet ist, welcher ein erstes Keilelement 33 bzw. erstes Keilsegment 33 und ein zweites Keilelement 34 bzw. ein zweites Keilsegment 34 umfasst. Die Keilsegmente 33, 34 werden durch eine in der Figur 3 nicht dargestellte weitere Feder an ihren in Figur 3 im oberen Bereich der Figur angeordneten und sich gegenüberliegenden Breitseiten derart auseinandergedrückt, dass die Exzentrizität der zweiten Verzahnung 32 relativ zur Drehachse 30 maximal wird. Dies führt dazu, dass an einer Stelle des Umfangs der zweiten Verzahnung 32 dieselbe mit der ersten Verzahnung 31 kämmt. Dies ist in der in Figur 3 dargestellten Situation im oberen Bereich der zweiten Verzahnung 32 bzw. auch der ersten Verzahnung 31 der Fall. Die Keilsegmente 33, 34 weisen ausgehend von der Drehachse 30 einen inneren Radius 35 auf sowie einen äußeren Radius 36 auf. Durch die Keilform der Keilsegmente 33, 34 unterscheidet sich der Innenradius 35 vom Außenradius 36, wobei der Außenradius 36 größer ist als der Innenradius 35. Der Außenradius 36 entspricht nun im wesentlichen der radialen Ausdehnung des Bremselements 40 ausgehend von der Drehachse 30. Hierunter soll im Rahmen der vorliegenden Erfindung verstanden werden, dass das Bremselement 40 hinsichtlich seiner Ausdehnung in radialer Richtung ausgehend von der Drehachse 30 im Bereich von maximal 90 bis 120% des Außenradius 36 der Keilsegmente 33, 34 entspricht, wobei es erfindungsgemäß bevorzugt ist, wenn die Ausdehnung des Bremselements 40 in radialer Richtung ausgehend von der Drehachse 30 maximal etwa 95% bis 110% des Außenradius 36 entspricht. Das Bremselement 40 wird erfindungsgemäß weiterhin durch ein Federelement 45 nach oben gedrückt (in der Einstellung gemäß Figur 3). Hierbei greift ein erstes Blockierelement 41 radial in eine Ausnehmung zwischen zwei zweite Blockierelemente 42 ein. Hierdurch wird eine Arretierung des Bremselements 40 gegen eine Verdrehung um die Drehachse 30 erreicht. Aus der Figur 3 wird weiterhin deutlich, dass die Keilsegmente 33, 34 ein drittes Blockierelement 43 aufweisen, welches in axialer Richtung, d. h. parallel zur Drehachse 30, in die Ebene des Bremselements 40 hineinragt und normalerweise in einer Ausnehmung 44 des Bremselements 40 angeordnet ist. Diese Ausnehmung 44 des Bremselements 40 weist für das dritte Blockierelement 43 des jeweiligen Keilsegments 33, 34 eine erste Kante 44' und eine zweite Kante 44" (bzw. einen ersten Anschlag 44' und einen zweiten Anschlag 44") auf. Falls eine Kraft auf den Verstellbeschlag 10 ausgeübt wird, kann es dazu kommen, dass eine solche Kraft bzw. ein solches Drehmoment eine Verschiebung eines der Keilsegmente 33, 34 derart bewirkt, dass das dritte Blockierelement 43 an das Bremselement 40 anschlägt bzw. angedrückt wird (über eine der Kanten bzw. Anschläge 44' bzw. 44"), wodurch (für den Fall des Anschlagens des zweiten Keilsegments 34 an der zweiten Kante 44" der Ausnehmung 44 des Bremselements 40) beispielsweise eine nach links gerichtete Kraftkomponente auf das Bremselement 40 ausgeübt wird. Diese Kraft wird durch das Bremselement 40 bzw. durch das erste Beschlagteil 1 mit Hilfe des zweiten Blockierelements 42 derart kompensiert (im Sinne einer reactio-Kraft), dass am Kontaktpunkt des ersten Blockierelements 41 mit dem zweiten Blockierelement 42 eine entgegengesetzt gerichtete Kraft (im Beispiel nach rechts gerichtet) wirkt. Eine weitere Kraftkomponente, die als Kompensation der von dem dritten Blockierelement 43 auf das Bremselement 40 ausgeübte Kraft anzusehen ist, wirkt (im Beispiel nach rechts gerichtet) an dem Antriebselement 50, insbesondere in einem mit den Bezugszeichen 55 bezeichneten Bereich. Hierdurch ergibt sich ein Kraftfluss durch wenigstens drei Angriffspunkte, der eine wirkungsvolle Verriegelung bzw. eine wirkungsvolle Feststellung des ersten Beschlagteils 1 relativ zum zweiten Beschlagteil 2 garantiert. Als Endanschlag für die Bewegung des durch das Federelement 45 nach oben gedrückten Bremselements 40 ist ein mit dem Bezugszeichen 57 versehener Bereich des Antriebselements 50 vorgesehen.

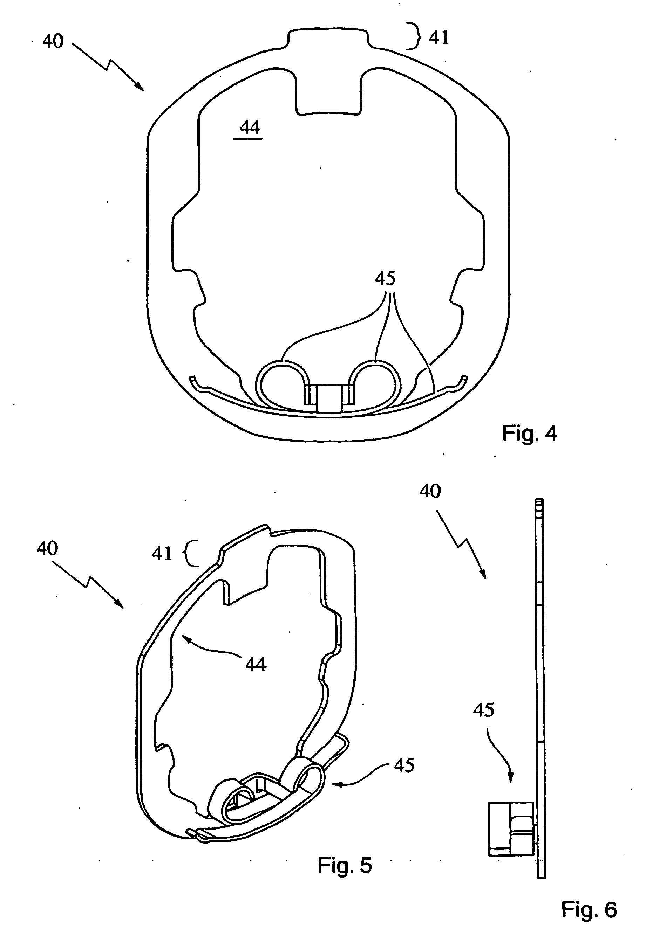

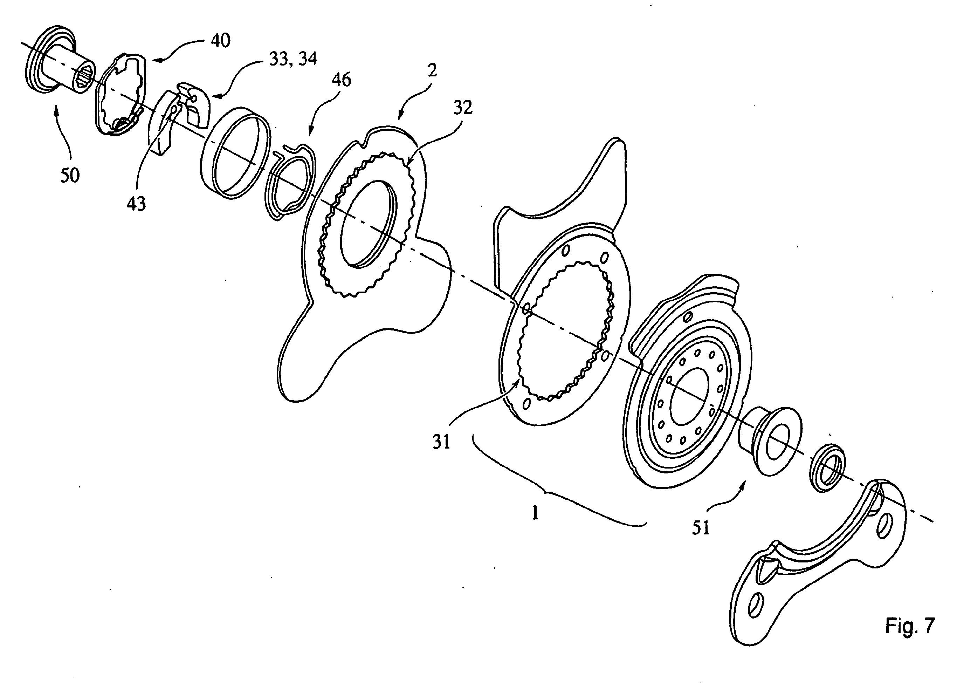

In den Figuren 4 bis 6 sind verschiedene Ansichten des Bremselementes 40 dargestellt. Hierbei zeigt die Figur 4 eine schematische Draufsicht bzw. Vorderansicht auf das Bremselement 40. Erkennbar ist die Ausnehmung 44 des Bremselementes 40, das erste Blockierelement 41 sowie das Federelement 45. Diese Elemente sind auch in einer in Figur 5 dargestellten perspektivischen Ansicht des Bremselementes 40 dargestellt. Figur 6 zeigt eine Schnittdarstellung des Bremselementes 40, bei der insbesondere das Federelement 45 erkennbar ist. Aus der Figur 6 geht hervor, dass das Bremselement 40 im Wesentlichen vollständig (bis auf das Federelement 45) in einer Ebene verläuft, welche im erfindungsgemäßen Verstellbeschlag 10 in radialer Richtung, d. h. senkrecht zur Drehachse 30, verläuft. Erfindungsgemäß ist vorgesehen, dass ausgehend von der radialen Ebene des Bremselementes 40 beispielsweise die erste und zweite Verzahnung 31, 32 links der Ebene des Bremselementes 40 angeordnet sind. In diesem Beispiel würde das zweite Blockierelement 42, welches mit dem ersten Beschlagteil 1 verbunden ist, bzw. welches Teil des ersten Beschlagteils 1 ist, von der gegenüberliegenden Seite, d. h. von rechts, in die Ebene des Bremselementes 40 hineinragen, so dass das erste Blockierelement 41 mit dem zweiten Blockierelement 42 in der Blockierstellung des Bremselements 40 eingreifen kann, wie dies in der Figur 3 dargestellt ist. In die Ebene des Bremselements 40 ragt auch das dritte Blockierelement 43 hinein und zwar im dargestellten Beispiel wiederum von der linken Seite, d. h. von der gleichen Seite aus, auf welcher die erste und zweite Verzahnung 31, 32 relativ zum Bremselement 40 liegt. Erfindungsgemäß ist weiterhin vorgesehen, dass die Keilsegmente 33, 34 mittel eines weiteren Federelements 46 an ihren Breitseiten auseinander gedrückt werden, so dass die Exzentrizität der ersten Verzahnung 31 relativ zur zweiten Verzahnung 32 maximiert wird. (vgl. Fig. 7)

Aus Figur 7 geht eine Explosionsdarstellung der wesentlichen Teile des Verstellbeschlags 10 hervor. Ein Antriebselement 50 weist eine keilwellenförmige Ausnehmung in seiner Mitte auf. Durch das Antriebselement 50 verläuft die Drehachse 30 (in Figur 7 nicht dargestellt). Das Antriebselement 50 weist einen Mitnehmer 56 auf, zu dem auch der in Figur 3 mit dem Bezugszeichen 55 bezeichnete Bereich des Antriebselementes 50 gehört. Mittels des Mitnehmers (In Figur 7 der Einfachheit halber nicht bezeichnet) treibt die Keilsegmente 33, 34 bei einer Drehung des Antriebselementes 50 um die Drehachse 30 in die eine oder andere Drehrichtung. Hierbei wird die Exzentereinstellung der ersten Verzahnung 31 gegenüber der zweiten Verzahnung 32 verändert. Gleichzeitig wird über die formschlüssige Verbindung des Antriebselementes 50 mit seinen Mitnehmerbereichen 55, 56 auch das Bremselement 40 gedreht. Hierzu muss das Bremselement 40 ausgehend von der in Figur 3 dargestellten Blockierstellung in eine Freigabestellung eingestellt werden, bei der das Bremselement in Richtung in Figur 3 nach unten gegen die Federkraft des Federelementes 45 verschoben ist, so dass das Bremselement 40 mit dem ersten Blockierelement 41 nicht mehr zwischen die Vorsprünge des zweiten Blockierelements 42 eingreift, d. h. das Bremselement 40 ist mit seinem ersten Blockierelement 41 radial innerhalb des Innenradius des zweiten Blockierelementes 42 eingestellt und kann so zusammen mit dem Antriebselement 50 gedreht werden. Eine solche Drehung bewirkt eine Taumelbewegung des ersten Beschlagteils 1 und damit der ersten Verzahnung 31 um das zweite Beschlagteil 2 bzw. die zweite Verzahnung 32. Die erste Verzahnung 31 weist hierbei wenigstens einen Zahn mehr auf als die zweite Verzahnung 32, so dass es zu einer Drehverstellung des ersten Beschlagteils 1 relativ zum zweiten Beschlagteil 2 kommt. Wenn die Drehbewegung um die Drehachse 30 des Antriebselementes 50 beendet ist, ist das Bremselement 40 entweder so eingestellt, dass das erste Blockierelement 41 an seiner Außenseite an der Innenseite von einem der Vorsprünge des zweiten Blockierelementes 42 anstößt, wobei die Kraftwirkung des Federelementes 45 eine Andrück- bzw. eine Anpresskraft der Außenseite des ersten Blockierelements 41 auf das zweite Blockierelement 42 ausübt. Durch das Auseinanderdrücken der Keilsegmente 33, 34 mittels des weiteren Federelements 46 wird eine Arretierung des Verstellbeschlags 10 erreicht. Sollte diese Arretierung insbesondere bei wechselnden Lasten bzw. Vibrationen oder Rüttelbewegungen nicht ausreichend sein, so findet eine geringfügige Verstellung des Verstellbeschlags 10 derart statt, dass das erste Blockierelement 41 durch Verdrehung des Bremselements 40 zwischen zwei Vorsprünge des zweiten Blockierelements 42 eingreift und damit eine Blockierung zwischen dem ersten und zweiten Beschlagteil 1, 2 erzielt wird. Ein weiterer Ablauf des Verstellbeschlags 10 ist dann nicht mehr möglich. Dieser geringfügige Ablauf des Verstellbeschlags 10 ist erfindungsgemäß aufgrund der großen Übersetzung für einen Benutzer der Kraftfahrtzeugkomponente 20 nicht erkennbar.

### Bezugszeichenliste:

- 1: erstes Beschlagteil
- 2: zweites Beschlagteil
- 3: Getriebe
- 10: Verstellbeschlag
- 20: Kraftfahrzeugkomponente
- 21: Lehnenteil
- 22: Sitzteil
- 30: Drehachse
- 31: erste Verzahnung
- 32: zweite Verzahnung
- 33: erstes Keilsegment
- 34: zweites Keilsegment
- 35: Innenradius der Keilsegmente
- 36: Außenradius der Keilsegmente
- 40: Bremselement
- 41: erstes Blockierelement
- 42: zweites Blockierelement
- 43: drittes Blockierelement
- 44: Ausnehmung des Bremselements
- 44', 44": erster und zweiter Anschlag
- 45: Federelement
- 46: weiteres Federelement
- 50: Antriebselement
- 51: weiteres Antriebselement
- 55: Bereich des Mitnehmers
- 56: Mitnehmer des Antriebselements
- 57: Bereich des Antriebselements

## Patentansprüche

1. Verstellbeschlag (10) für einen Fahrzeugsitz (20) mit einem ersten Beschlagteil (1) und mit einem hierzu mittels eines Getriebes (3) um eine Drehachse (30) drehverstellbar vorgesehenen zweiten Beschlagteil (2), wobei das Getriebe (3) eine erste Verzahnung (31) am ersten Beschlagteil (1) umfasst und wobei das Getriebe (3) eine exzentrisch zur ersten Verzahnung (31) angeordnete zweite Verzahnung (32) am zweiten Beschlagteil (2) umfasst, wobei zwei Keilsegmente (33, 34) zur Sicherstellung der exzentrischen Anordnung der ersten Verzahnung (31) relativ zur zweiten Verzahnung (32) vorgesehen sind, wobei die Keilsegmente (33, 34) einen Innenradius (35) und einen Außenradius (36) aufweisen, wobei der Verstellbeschlag (10) ein Bremselement (40) aufweist und wobei das Bremselement (40) in radialer Richtung (30) ausgehend von der Drehachse (30) eine Ausdehnung etwa entsprechend des Außenradius (36) der Keilsegmente (33, 34) aufweist, **dadurch gekennzeichnet, dass** das Bremselement (40) in eine Blockierstellung und in eine Freigabestellung einstellbar ist, wobei das Bremselement (40) ein erstes Blockierelement (41) umfasst, wobei in der Blockierstellung das erste Blockierelement (41) in ein zweites Blockierelement (42) des ersten Beschlagteils (1) radial zur Drehachse (30) eingreifend vorgesehen ist, wobei das zweite Blockierelement (42) in radialer Richtung (30) ausgehend von der Drehachse (30) eine kleinere Ausdehnung als die zweite Verzahnung (32) und als die erste Verzahnung (31) aufweist.

2. Verstellbeschlag (10) nach Anspruch 1, **dadurch gekennzeichnet, dass** das erste Blockierelement (41) und das zweite Blockierelement (42) derart vorgesehen sind, dass eine Anzahl von Blockierstellungen vorgegeben sind, wobei die Anzahl von Blockierstellungen kleiner ist als die Zähnezahl sowohl der ersten Verzahnung (31) als auch der zweiten Verzahnung (32).

3. Verstellbeschlag (10) nach einem der vorhergehenden Ansprüche oder nach dem Oberbegriff des Anspruchs 1, **dadurch gekennzeichnet, dass** die Keilelemente (33, 34) jeweils ein drittes Blockierelement (43) aufweisen, wobei das dritte Blockierelement (43) zum parallel zur Drehachse (30) vorgesehenen Eingriff in eine Ausnehmung (44) des Bremselements (40) vorgesehen ist.

4. Verstellbeschlag (10) nach einem der vorhergehenden Ansprüche oder nach dem Oberbegriff des Anspruchs 1, **dadurch gekennzeichnet, dass** der Verstellbeschlag (10) für einen Kraftfahrzeugsitz (20) mit einem Sitzteil (22) und mit einem Lehnenteil (21) vorgesehen ist, wobei das erste Beschlagteil (1) lehnenteilfest vorgesehen ist, wobei das zweite Beschlagteil (2) sitzteilfest vorgesehen ist und wobei das Bremselement (40) eine direkte Kraftwirkung zwischen dem ersten Beschlagteil (1) und wenigstens einem der Keilsegmente (33, 34) vermittelt.

5. Verstellbeschlag (10) nach einem der vorhergehenden Ansprüche oder nach dem Oberbegriff des Anspruchs 1, **dadurch gekennzeichnet, dass** das Bremselement (40) ein erstes Blockierelement (41) und ein Federelement (45) umfasst, wobei das Federelement (45) vorgesehen ist, das Bremselement (40) in Richtung des ersten Blockierelements (41) zu verschieben, wobei das Blockierelement (41) und das Federelement (45) im wesentlichen an gegenüberliegenden Enden des Bremselements (40) angeordnet sind.

6. Verfahren zur Sicherung der Arretierung eines Verstellbeschlags (10) für einen Fahrzeugssitz (20), wobei der Verstellbeschlag (10) einen ersten Beschlagteil (1) und einen hierzu mittels eines Getriebes (3) um eine Drehachse (30) drehverstellbar vorgesehenen zweiten Beschlagteil (2) aufweist, wobei das Getriebe (3) eine erste Verzahnung (31) am ersten Beschlagteil (1) umfasst und wobei das Getriebe (3) eine exzentrisch zur ersten Verzahnung (31) angeordnete zweite Verzahnung (32) am zweiten Beschlagteil (2) umfasst, wobei zwei Keilsegmente (33, 34) zur Sicherstellung der exzentrischen Anordnung der ersten Verzahnung (31) relativ zur zweiten Verzahnung (32) vorgesehen sind und wobei ein Bremselement (40) vorgesehen ist, **dadurch gekennzeichnet, dass** durch das Bremselement (40) eine direkte Kraftwirkung zwischen dem ersten Beschlagteil (1) und wenigstens einem der Keilsegmente (33, 34) vermittelt wird.

## Claims

1. Adjustment fitting (10) for a vehicle seat (20), comprising a first fitting part (1) and comprising a second fitting part (2) provided to be rotationally adjustable relative thereto about a rotational shaft (30) by means of a gear unit (3), the gear unit (3) comprising a first gear (31) on the first fitting part (1) and the gear unit (3) comprising a second gear (32) on the second fitting part (2) arranged eccentrically to the first gear (31), two wedge segments (33, 34) being provided for ensuring the eccentric arrangement of the first gear (31) relative to the second gear (32), the wedge segments (33, 34) having an internal radius (35) and an external radius (36), the adjustment fitting (10) having a braking element (40) and the braking element (40) in the radial direction (30) starting from the rotational shaft (30) having an extension approximately corresponding to the external radius (36) of the wedge segments (33, 34), **characterized in that** the braking element (40) may be adjusted into a locked position and into a position of release, the braking element (40) comprising a first locking element (41), the first locking element (41) being provided in the locked position to engage radially to the rotational shaft (30) in a second locking element (42) of the first fitting part (1), the second locking element (42) in the radial direction (30) starting from the rotational shaft (30) having a smaller extension than the second gear (32) and than the first gear (31).

2. Adjustment fitting (10) according to Claim 1, **characterized in that** the first locking element (41) and the second locking element (42) are provided such that a number of locked positions are predetermined, the number of locked positions being smaller than the number of teeth, both of the first gear (31) and of the second gear (32).

3. Adjustment fitting (10) according to one of the preceding claims or according to the preamble of Claim 1, **characterized in that** the wedge elements (33, 34) respectively have a third locking element (43), the third locking element (43) being provided for engagement in a recess (44) of the braking element (40), provided parallel to the rotational shaft (30).

4. Adjustment fitting (10) according to one of the preceding claims or according to the preamble of Claim 1, **characterized in that** the adjustment fitting (10) is provided for a motor vehicle seat (20) comprising a seat part (22) and comprising a backrest part (21), the first fitting part (1) being provided fixed to the backrest part, the second fitting part (2) being provided fixed to the seat part and the braking element (40) providing direct force action between the first fitting part (1) and at least one of the wedge segments (33, 34).

5. Adjustment fitting (10) according to one of the preceding claims or according to the preamble of Claim 1, **characterized in that** the braking element (40) comprises a first locking element (41) and a spring element (45), the spring element (45) being provided to displace the braking element (40) toward the first locking element (41), the locking element (41) and the spring element (45) being substantially arranged at opposing ends of the braking element (40).

6. Method for securing the locking effect of an adjustment fitting (10) for a vesicle seat (20), the adjustment fitting (10) having a first fitting part (1) and a second fitting part (2) provided to be rotationally adjustable relative thereto about a rotational shaft (30) by means of a gear unit (3), the gear unit (3) comprising a first gear (31) on the first fitting part (1) and the gear unit (3) comprising a second gear (32) on the second fitting part (2) arranged eccentrically to the first gear (31), two wedge segments (33, 34) being provided for ensuring the eccentric arrangement of the first gear (31) relative to the second gear (32) and a braking element (40) being provided, **characterized in that** by means of the braking element (40) direct force action is provided between the first fitting part (1) and at least one of the wedge segments (33, 34).

## Revendications

1. Ferrure de réglage (10) pour un siège de véhicule (20) comprenant une première partie de ferrure (1) et une deuxième partie de ferrure (2) prévue de manière à pouvoir être réglée en rotation autour d'un axe de rotation (30) par rapport à celle-ci au moyen d'un engrenage (3), l'engrenage (3) comprenant une première denture (31) sur la première partie de ferrure (1) et l'engrenage (3) comprenant une deuxième denture (32) sur la deuxième partie de ferrure (2), disposée de manière excentrée par rapport à la première denture (31), deux segments de clavette (33, 34) étant prévus pour fixer l'agencement excentrique de la première denture (31) par rapport à la deuxième denture (32), les segments de clavette (33, 34) présentant un rayon interne (35) et un rayon externe (36), la ferrure de réglage (10) présentant un élément de frein (40) et l'élément de frein (40) présentant, dans la direction radiale (30) depuis l'axe de rotation (30), une étendue correspondant approximativement au rayon externe (36) des segments de clavette (33, 34), **caractérisée en ce que** l'élément de frein (40) peut être ajusté dans une position de blocage et dans une position de libération, l'élément de frein (40) comprenant un premier élément de blocage (41), le premier élément de blocage (41), dans la position de blocage, étant prévu de manière à s'engager dans un deuxième élément de blocage (42) de la première partie de ferrure (1) radialement par rapport à l'axe de rotation (30), le deuxième élément de blocage (42) présentant, dans la direction radiale (30), partant de l'axe de rotation (30), une plus petite étendue que la deuxième denture (32) et que la première denture (31).

2. Ferrure de réglage (10) selon la revendication 1, **caractérisée en ce que** lie premier élément de blocage (44.) et le deuxième élément de blocage (42) sont prévus de telle sorte qu'un certain nombre de positions de blocage soit prédéfini, le nombre des positions de blocage étant inférieur au nombre des dents de la première denture (31) et de la deuxième denture (32).

3. Ferrure de réglage (10) selon l'une quelconque des revendications précédentes, ou selon le préambule de la revendication 1, **caractérisée en ce que** les éléments de clavette (33, 34) présentent à chaque fois un troisième élément de blocage (43), le troisième élément de blocage (43) étant prévu pour s'engager parallèlement à l'axe de rotation (30) dans un évidement (44) de l'élément de frein (40).

4. Ferrure de réglage (10) selon l'une quelconque des revendications précédentes, ou selon le préambule de la revendication 1, **caractérisée en ce que** la ferrure de réglage (10) est prévue pour un siège de véhicule automobile (20) avec une partie de siège (22) et une partie de dossier (21), la première partie de ferrure (1) étant prévue de manière fixée à une partie du dossier, la deuxième partie de ferrure (2) étant prévue de manière fixée à une partie du siège, et l'élément de frein (40) permettant une action de force directe entre la première partie de ferrure (1) et au moins l'un des éléments de clavette (33, 34).

5. Ferrure de réglage (10) selon l'une quelconque des revendications précédentes, ou selon le préambule de la revendication 1, **caractérisée en ce que** l'élément de frein (40) comprend un premier élément de blocage (41) et un élément de ressort (45), l'élément de ressort (45) étant prévu pour déplacer l'élément de frein (40) dans la direction du premier élément de blocage (41), l'élément de blocage (41) et l'élément de ressort (45) étant disposés essentiellement sur des extrémités opposées de l'élément de frein (40).

6. Procédé pour fixer le blocage d'une ferrure de réglage (10) pour un siège de véhicule (20), la ferrure de réglage (10) présentant une première partie de ferrure (1) et une deuxième partie de ferrure (2) prévue de manière à pouvoir être réglée en rotation autour d'un axe de rotation (30) par rapport à celle-ci au moyen d'un engrenage (3), l'engrenage (3) comprenant une première denture (31) sur la première partie de ferrure (1) et l'engrenage (3) comprenant une deuxième denture (32) sur la deuxième partie de ferrure (2), disposée de manière excentrée par rapport à la première denture (31), deux segments de clavette (33, 34) étant prévus pour fixer l'agencement excentrique de la première denture (31) par rapport à la deuxième denture (32), et un élément de frein (40) étant prévu, **caractérisé en ce que** l'élément de frein (40) permet une action de force directe entre la première partie de ferrure (1) et au moins l'un des éléments de clavette (33, 34).
